# EUROPÄISCHE PATENTSCHRIFT

(11) **EP 1 368 212 B1**
(45) Veröffentlichungstag und Bekanntmachung des Hinweises auf die Patenterteilung: **04.05.2005**
(21) Anmeldenummer: 02712793.5
(22) Anmeldetag: 21.02.2002
(51) Int. Cl.: B60R 21/01

(54) **STEUERUNGS-/AUSWERTUNGSSYSTEM FÜR EINEN SENSORVERBUND**
CONTROL AND EVALUATION SYSTEM FOR A COMPOUND SENSOR
SYSTEME DE COMMANDE/D'EVALUATION POUR UN DETECTEUR COMPOSE

(30) Priorität: 02.03.2001 DE 10110042
(43) Veröffentlichungstag der Anmeldung: 10.12.2003
(73) Patentinhaber: ROBERT BOSCH GMBH, 70442 Stuttgart (DE)
(72) Erfinder: SCHLICK, Michael, 76372 Pfinztal (DE); HOETZEL, Juergen, 61197 Florstadt (DE); ZIMMERMANN, Uwe, 71636 Ludwigsburg (DE); MORITZ, Rainer, 70794 Filderstadt-Bernhausen (DE); LUCAS, Bernhard, 74354 Besigheim (DE); TOENNESEN, Tore, 72760 Reutlingen (DE); WINNER, Hermann, 76467 Bietigheim (DE); HUEPPAUFF, Martin, 70563 Stuttgart (DE); UHLER, Werner, 76646 Bruchsal (DE); BULLA, Joachim, 71282 Hemmingen (DE); SCHMID, Dirk, 75397 Simmozheim (DE)
(86) Internationale Anmeldenummer: PCT/DE2002/000607
(87) Internationale Veröffentlichungsnummer: WO 2002/070307

(56) Entgegenhaltungen:
- EP-A- 0 518 381
- EP-A- 0 775 613
- DE-A- 4 324 753
- US-A- 6 087 928

## Beschreibung

### STAND DER TECHNIK

Die vorliegende Erfindung betrifft ein Steuerungs/Auswertungssystem für einen Sensorverbund, insbesondere in Kraftfahrzeugen.

Obwohl auf beliebige Fortbewegungsmittel anwendbar, werden die vorliegende Erfindung sowie die ihr zugrundeliegende Problematik in bezug auf ein an Bord eines Kraftfahrzeuges befindliches System erläutert.

Um ein Fahren mit einem Kraftfahrzeug zu erleichtern und Zusammenstöße mit einem Wagen oder anderen im Weg befindlichen Gegenständen für einen Schutz der Insassen zu verhindern, ist es bekannt, an der Vorder- und/oder Rückseite des Kraftfahrzeuges Sensoren vorzusehen, welche Signale aussenden, um die von dem Hindernis reflektierten Signale wieder zu empfangen, Dabei wird der Abstand zwischen dem am Kraftfahrzeug angeordneten Sensor und dem Hindernis aus der Laufzeit des Signals vom Sensor zum Hindernis und wieder zurück bestimmt. Zur Erfassung der Objekte, insbesondere zur Abstandsmessung, sind verschiedenste Vorrichtungen bekannt, die beispielsweise auf der Basis von Radar, Lasern oder Ultraschall arbeiten.

Insbesondere im Nahbereich kommen Ultraschall-Sensoren wegen ihrer sehr hohen Auflösung zum Tragen.

In der DE 199 01 847 A1 wird eine Vorrichtung zur Erfassung von Objekten, insbesondere als Einparkhilfe-Assistenz-Vorrichtung in einem Kraftfahrzeug, beschrieben. Dabei sind alle Abstands-Sensoren mit einem einzigen Mikrokontroller und einer Ausgabeeinheit verbunden.

Bei einem Anschluss aller Sensoren an eine gemeinsame Kontrollereinrichtung hat sich die Tatsache als nachteilhaft herausgestellt, dass die Kontrollereinrichtung auf eine maximal mögliche Leistung konfiguriert werden muss, um eventuell eine Aufrüstung zu gewähren, selbst wenn augenblicklich nur Teilbereiche am Fahrzeug mit Sensoren ausgestattet werden. Somit ist für eine kundenorientierte Ausstattung des Kraftfahrzeuges mit Sensoren lediglich in bestimmten Bereichen der Einsatz einer universellen, maximal konfigurierten Kontrollereinrichtung kostspielig und mit einem technischen Mehraufwand beaufschlagt.

Zudem ist ein solches System meist nicht für einen Funktionsausbau mit anspruchsvollen Algorithmen und Funktionen gerüstet.

Die der vorliegenden Erfindung zugrundeliegende Problematik besteht also allgemein darin, ein Steuerungs/Auswertungssystem für einen Sensorverbund zu schaffen, welches benutzer- und anwendungsspezifisch bezüglich Kosten und technischem Aufwand optimierbar ist.

### VORTEILE DER ERFINDUNG

Das erfindungsgemäße Steuerungs-/Auswertungssystem mit den Merkmalen des Anspruchs 1 weist gegenüber den bekannten Systemen den Vorteil auf, dass im Falle einer anfänglich nicht kompletten Ausstattung des Kraftfahrzeuges mit Sensoren ein entsprechend an die jeweilige Anforderungen angepasstes System verwendbar ist. Dieses ist sowohl kostengünstiger als auch mit einem geringeren Einbauaufwand aufgrund geringer Verkabelung verbunden. Zudem ist das erfindungsgemäße System unter Einsatz geringen technischen Aufwands leicht aufrüstbar. Die hohe Flexibilität bei der Entwicklung sorgt für eine schnellere Reaktion auf Markterfordernisse und einfachere Variantenbereitstellung.

Die der vorliegenden Erfindung zugrundeliegende Idee besteht darin, dass das Steuerungs-/Auswertungssystem in mehrere Bereiche aufgeteilt ist, wobei die Bereiche jeweils mindestens ein Kontrollereinrichtung und mehrere mit dieser verbundene Sensoreinrichtungen aufweisen, wobei die Kontrollereinrichtungen für eine gemeinsame Anwendungsfunktion miteinander verbindbar sind.

Es erfolgt eine Aufteilung der Steuerung und der Auswertung der Umfeldsensorik auf bestimmte Teilbereiche des Kraftfahrzeuges, wodurch unabhängig arbeitende Systeme mit einer optimierten Gerätekonfiguration geschaffen werden, die jedoch für eine Kommunikation miteinander verbindbar sind.

In den Unteransprüchen finden sich vorteilhafte Weiterbildungen und Verbesserungen des in Anspruch 1 angegebenen Steuerungs-/Auswertungssystems.

Gemäß einer bevorzugten Weiterbildung sind die Kontrollereinrichtungen der einzelnen Bereiche über ein Bus-System miteinander verbindbar. Somit wird eine einfache und kostengünstige Kommunikation der einzelnen Kontrollereinrichtungen miteinander gewährleistet.

Gemäß einer weiteren bevorzugten Weiterbildung sind die Sensoreinrichtungen eines Bereiches mit der entsprechenden Kontrollereinrichtung über ein Bus-System oder eine Punkt-zu-Punkt-Verbindung (Point-to-Point-Verbindung) verbindbar.

Gemäß einer weiteren bevorzugten Weiterbildung sind die Kontrollereinrichtungen jeweils baugleich ausgebildet. Dies ist sowohl herstellungstechnisch als auch aus ökonomischen Aspekten vorteilhaft.

Gemäß einer weiteren bevorzugten Weiterbildung ist mindestens eine Sensoreinrichtung innerhalb eines bestimmten Bereiches in die entsprechende Kontrollereinrichtung integrierbar. Diese beiden sind somit zu einer einteiligen Sensor-/Kontrollereinrichtung zusammengefasst. Mit dieser Sensor-/Kontrollereinrichtung wird neben der Ausarbeitung des zugehörigen eigenen Sensorsignals auch die Steuerungs-/Auswertungsfunktion übernommen.

Gemäß einer weiteren bevorzugten Weiterbildung sind die Sensor-/Kontrollereinrichtungen der einzelnen Bereiche für eine gemeinsame Anwendungsfunktion über ein Bus-System miteinander verbindbar. Somit wird gleichsam ein zuverlässiges und kostengünstiges Kommunikationssystem geschaffen.

Gemäß einer weiteren bevorzugten Weiterbildung sind die Sensoreinrichtungen eines Bereiches mit der entsprechenden Sensor-/Kontrollereinrichtung über ein Bus-System oder eine Punkt-zu-Punkt-Verbindung verbindbar.

Gemäß einer weiteren bevorzugten Weiterbildung ist im jeweiligen Bereich die Sensor-/Kontrollereinrichtung gegenüber den mehreren Sensoreinrichtungen nur minimal modifiziert. Somit unterscheiden sie sich vorteilhaft nur durch verschiedene Bestückvarianten, was zu einer weiteren Kostensenkung beiträgt.

Gemäß einer weiteren bevorzugten Weiterbildung sind die Sensoreinrichtungen baugleich ausgebildet. Auch dies ist herstellungstechnisch vorteilhaft und somit kostengünstig.

Gemäß einer weiteren bevorzugten Weiterbildung sind die Sensoreinrichtungen als Nahbereichssensoren ausgebildet.

Gemäß einer weiteren bevorzugten Weiterbildung erfolgt eine Aufteilung des Systems in mindestens einen der folgenden Bereiche: Vorder-, Rück-, Seiten- und/oder Eckbereich. Dabei ist es vorstellbar, dass der Seitenbereich weiter in einen linken und einen rechten Seitenbereich unterteilbar ist.

Gemäß einer weiteren bevorzugten Weiterbildung weist ein Bereich maximal sechs Sensoreinrichtungen auf. Dies hat sich für eine optimierte Auslegung der einzelnen Teilsysteme als besonders günstig erwiesen. Jedoch ist selbstverständlich eine abweichende Anzahl an Sensoren ebenfalls vorstellbar.

Gemäß einer weiteren bevorzugten Weiterbildung sind die Kontrollereinrichtungen der einzelnen Bereiche mit einer einheitlichen Software ausgestattet, in der insbesondere für eine Zuordnung der entsprechenden Kontrollereinrichtung eine Parametrisierung enthalten sein kann.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein schematisches Blockschaltbild eines Steuerungs-/Auswertungssystems in einem Kraftfahrzeug gemäß einem ersten Ausführungsbeispiel der vorliegenden Erfindung;
- Fig. 2: ein schematisches Blockschaltbild eines Steuerungs-/Auswertungssystems in einem Kraftfahrzeug gemäß einem zweiten Ausführungsbeispiel der vorliegenden Erfindung;
- Fig. 3: ein schematisches Blockschaltbild eines Steuerungs-/Auswertungssystems in einem Kraftfahrzeug gemäß einem dritten Ausführungsbeispiel der vorliegenden Erfindung;
- Fig. 4: ein schematisches Blockschaltbild eines Steuerungs-/Auswertungssystems in einem Kraftfahrzeug gemäß einem vierten Ausführungsbeispiel der vorliegenden Erfindung; und
- Fig. 5: ein schematisches Blockschaltbild eines Steuerungs-/Auswertungssystems in einem Kraftfahrzeug gemäß einem fünften Ausführungsbeispiel der vorliegenden Erfindung.

### BESCHREIBUNG DER AUSFÜHRUNGSBEISPIELE

In den Figuren bezeichnen gleiche Bezugszeichen gleiche oder funktionsgleiche Komponenten.

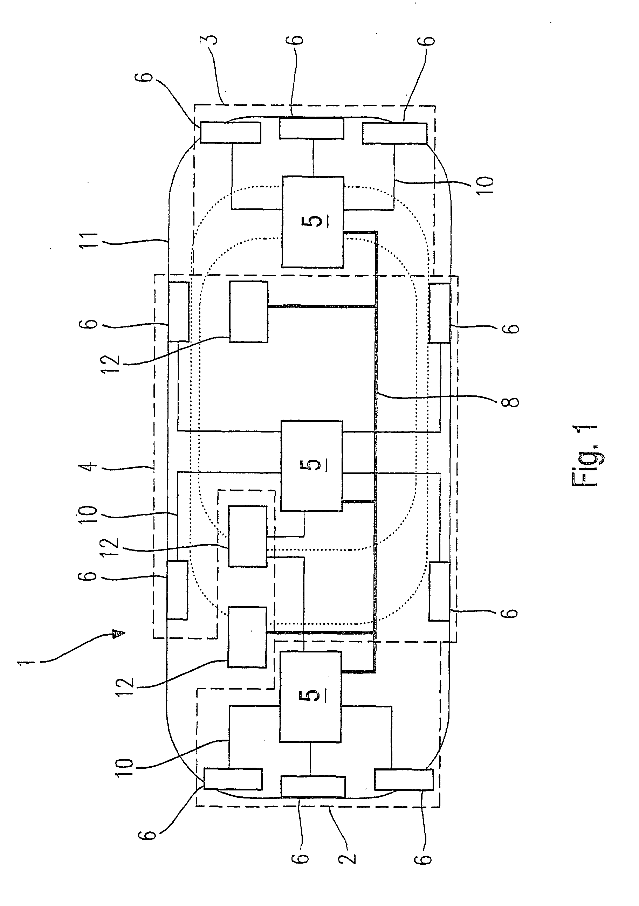

Fig. 1 illustriert ein schematisches Blockschaltbild eines Steuerungs-/Auswertungssystems 1, das in einem Kraftfahrzeug 11 angebracht ist. Das Steuerungs/Auswertungssystem 1 ist gemäß dem ersten Ausführungsbeispiel der vorliegenden Erfindung in drei Teilbereiche 2, 3, 4 unterteilt, wobei der Teilbereich 2 für eine Erfassung von Objekten vor dem Kraftfahrzeug, der Teilbereich 3 für eine Erfassung von Objekten hinter dem Kraftfahrzeug 11 und der Teilbereich 4 für eine Erfassung von Objekten seitlich des Kraftfahrzeuges 11 vorgesehen ist.

Selbstverständlich kann sowohl der Teilbereich 4 weiter in einen rechten und einen linken Bereich unterteilt werden, als auch eine völlig andere Aufteilung in Teilbereiche erfolgen.

Jeder Bereich 2, 3, 4 weist gemäß dem ersten Ausführungsbeispiel jeweils eine Kontrollereinrichtung 5 für eine Steuerung und Auswertung der Sensorsignale und drei mit der Kontrollereinrichtung 5 verbundene Sensoren 6 für ein Aussenden eines Signals und Empfangen des reflektierten Signals auf.

Gemäß dem ersten Ausführungsbeispiel sind die Sensoren 6 über eine Punkt-zu-Punkt(Point-to-Point)-Verbindung 10 mit der zugeordneten Kontrollereinrichtung 5 verbunden. Die einzelnen Kontrollereinrichtungen 5 wiederum sind für übergreifende Funktionen über ein Netzwerk, beispielsweise das echtzeitfähige serielle Bus-System "Kontroller Area Network" (CAN) verbunden. Je nach Anforderung erfolgt eine Aufteilung des Systems 1 in die einzelnen Teilbereiche. So kann es beispielsweise für eine Einparkhilfe sinnvoll sein, nur die Bereiche 2 und 3 in das entsprechende Kraftfahrzeug einzubauen. Im Falle einer Pre-Crash- oder Stop-and-Go-Anwendung ist beispielsweise lediglich der Einbau von Sensoren im vorderen Bereich des Kraftfahrzeuges, also eine Ausstattung lediglich mit dem Teilbereich 2, erforderlich. Die Sensoren 6 in einem Teilbereich 2, 3, 4 werden gemeinsam mittels der Kontrollereinrichtung 5 gesteuert und/oder ausgewertet. Die Kontrollereinrichtungen 5 können zudem die Funktion besitzen, eine gemeinsam geregelte Spannung zur Verfügung zu stellen und eine Diagnose des augenblicklichen Kraftfahrzeugzustandes zu erstellen.

Vorteilhaft sind alle Kontrollereinrichtungen 5 eines Systems 1 baugleich ausgebildet und enthalten die gleichen Funktionsmöglichkeiten und die gleiche Software. Sie können jedoch bezüglich der Prozessorleistung und der Ansteuerung unterschiedlicher Anzeigen variieren. Optional ist mit der Software der Kontrollereinrichtungen 5 in Form einer Bandende-Programmierung eine Zuordnung der entsprechenden Kontrollereinrichtung durch eine Parametrisierung möglich.

Beispielsweise kann somit eine Kontrollereinrichtung einem bestimmten Bereich 2, 3, 4 oder einer bestimmten Sensoreinrichtung 6 zugewiesen werden und dementsprechend bestimmte nicht benötigte Programmschritte aussetzen.

Die einzelnen über das Bus-System 8 miteinander verbundenen Kontrollereinrichtungen 5 bilden somit ein gesamtes Steuerungs-/Auswertungssystem 1, das ausgehend von den einzelnen Teilbereichen 2, 3, 4 den Gesamtzustand des Kraftfahrzeuges 11 bezüglich seiner Umgebung analysiert und gegebenenfalls im Zusammenspiel mit weiteren Kontrollereinrichtungen oder Anzeigegeräten entsprechende Maßnahmen einleitet. Dies kann beispielsweise ein akustisches oder optisches Warnsignal bei Unterschreitung eines bestimmten Sicherheitsabstandes für eine Einparkhilfe, Auslösen eines Airbags bei einer Pre-Crash-Funktionalität etc. sein. Diese übergeordnete Funktionalität ergibt sich aus dem Zusammenspiel der einzelnen Kontrollereinrichtungen 5 über das gemeinsame Bus-System 8. Teilbereich-übergreifende Informationsverdichtungen erfolgen durch die Steuergeräte 12 der entsprechenden Anwendungen.

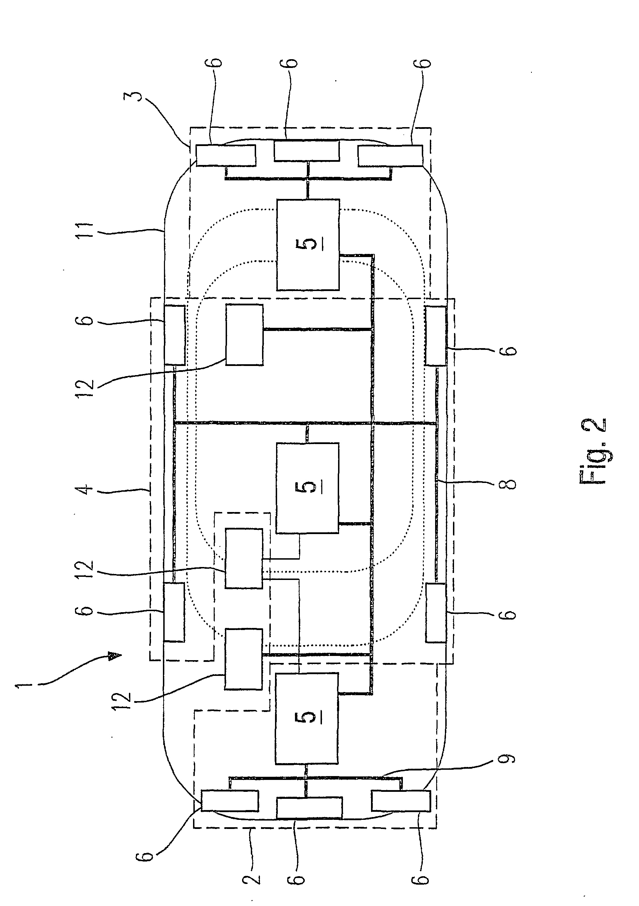

Fig. 2 zeigt ein schematisches Blockschaltbild eines Steuerungs-/Auswertungssystems 1 gemäß einem zweiten Ausführungsbeispiel der vorliegenden Erfindung. Im Unterschied zum ersten Ausführungsbeispiel sind die einzelnen Sensoren 6 eines Teilbereiches 2, 3, 4 ebenfalls über eine Bus-Verbindung 9 mit der entsprechenden Kontrollereinrichtung 5 verbunden.

Es kann auch ein gesamtes Bus-System vorgesehen sein, das sowohl eine Verbindung zwischen den Sensoren eines Bereiches als auch zwischen den Kontrolleinrichtungen oder zu Steuergeräten anderer Funktionen, z.B. Pre-Crash-Funktion, gewährleistet.

Die übrigen Komponenten und jeweiligen Funktionen entsprechen denen des ersten Ausführungsbeispiels und bedürfen daher keiner weiteren Erläuterung. Dasselbe gilt für die im folgenden näher erläuterten Ausführungsbeispiele 3 bis 5.

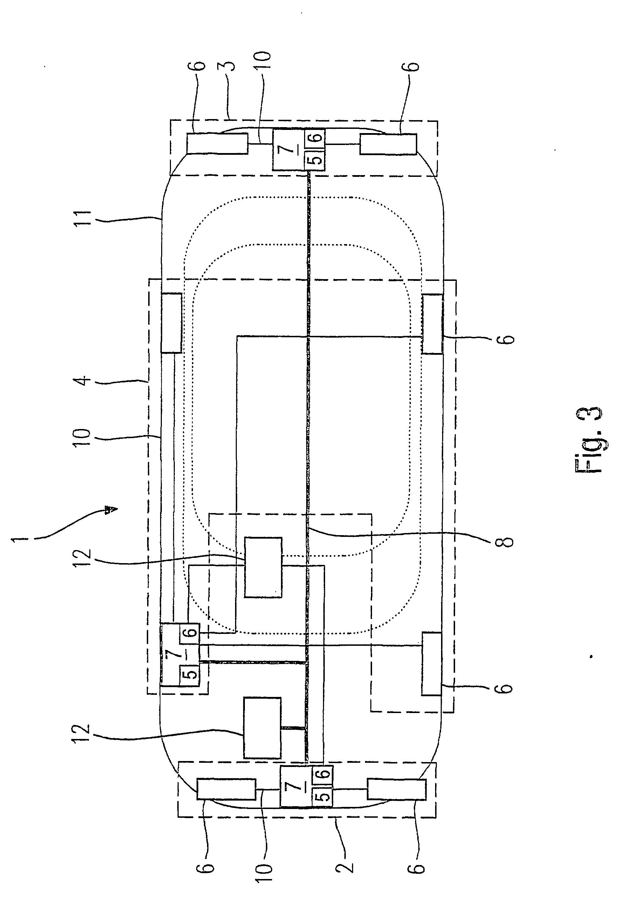

Fig. 3 zeigt ein schematisches Blockschaltbild eines Steuerungs-/Auswertungssystems 1 gemäß einem dritten Ausführungsbeispiel der vorliegenden Erfindung, wonach in jedem Bereich 2, 3, 4 die Kontrollereinrichtung 5 und ein Sensor 6 derart zusammengefasst sind, dass neben der Aufbereitung des eigenen Sensorsignals auch die Teilbereiche-Kontrollerfunktion mit übernommen wird, wobei eine Sensor-/Kontrollereinrichtung 7 als einteiliges Bauelement entsteht. Dies führt zu einer Einsparung eines Bauteils, wodurch ein kostengünstigeres, kompakteres und platzsparenderes System geschaffen wird.

Die übrigen Sensoren 6 in dem entsprechenden Teilbereich 2, 3, 4 sind gemäß dem dritten Ausführungsbeispiel über eine Punkt-zu-Punkt-Verbindung 10 an die Sensor/Kontrollereinrichtung 7 angeschlossen. Die jeweiligen Sensor-/Kontrollereinrichtungen 7 sind über ein Bus-System 8 für übergeordnete Funktionen miteinander verbunden. Dies ist im Prinzip analog zu den bisher dargestellten Ausführungsbeispielen.

Ebenfalls ist es denkbar, dass die Funktionen einer Kontrollereinrichtung nicht nur auf einen Sensor 6, sondern auf mehrere Sensoren 6 verteilt werden, d.h. beispielsweise bestimmte Versorgungsfunktionen und Bus-Konzepte werden auch auf die anderen Sensoren verlagert. Vorteilhaft jedoch ist die Hauptrechnerbelastung in einem Sensor untergebracht.

Vorteilhaft sind die jeweiligen Sensor/Kontrollereinrichtungen 7 aus herstellungstechnischen Gründen baugleich ausgebildet und gegenüber den Sensoreinrichtungen 6 nur minimal modifiziert. Diese Modifizierung ist beispielsweise auf eine höhere Prozessorleistung und verschiedene Anschlüsse begrenzt. Die verbleibenden Sensoreinrichtungen 6 sind vorteilhaft wiederum baugleich zueinander ausgebildet.

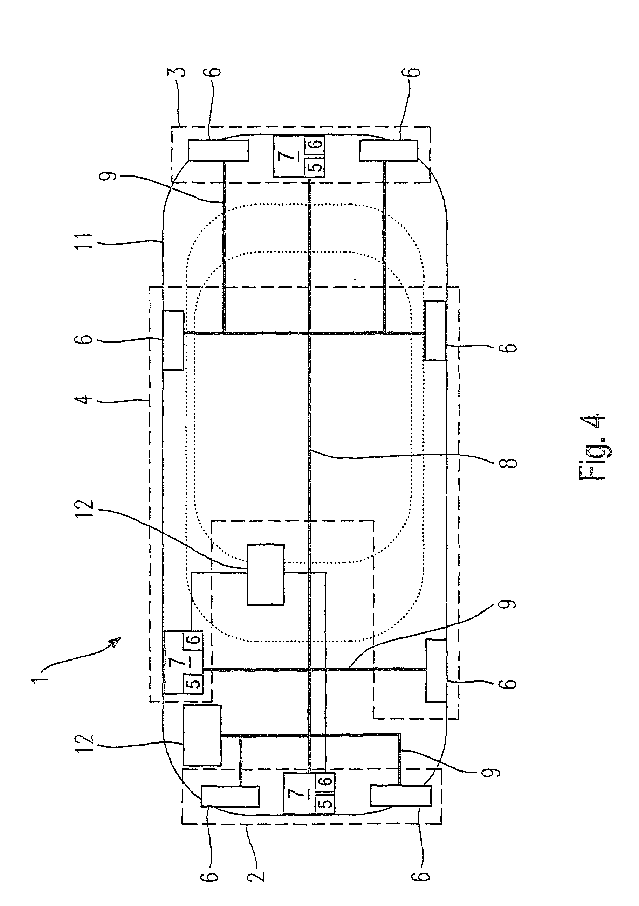

Fig. 4 zeigt ein schematisches Blockschaltbild eines Steuerungs-/Auswertungssystems 1 gemäß einem vierten Ausführungsbeispiel der vorliegenden Erfindung. Im Gegensatz zum dritten Ausführungsbeispiel sind die Sensoreinrichtungen 6 eines Bereiches 2, 3, 4 mit der entsprechenden Sensor-/Kontrollereinrichtung 7 über ein geeignetes Bus-System 9 verbunden. Dadurch ist ein einfaches und an die entsprechenden Anforderungen anpassungsfähiges System geschaffen. Kontrollereinrichtungen 12 für bestimmte Funktionen, wie Auslösen eines Airbags, Anzeigen bestimmter Informationen etc., sind über ein Netzwerksystem mit den relevanten Sensor-/Kontrollereinrichtungen 7 verbunden.

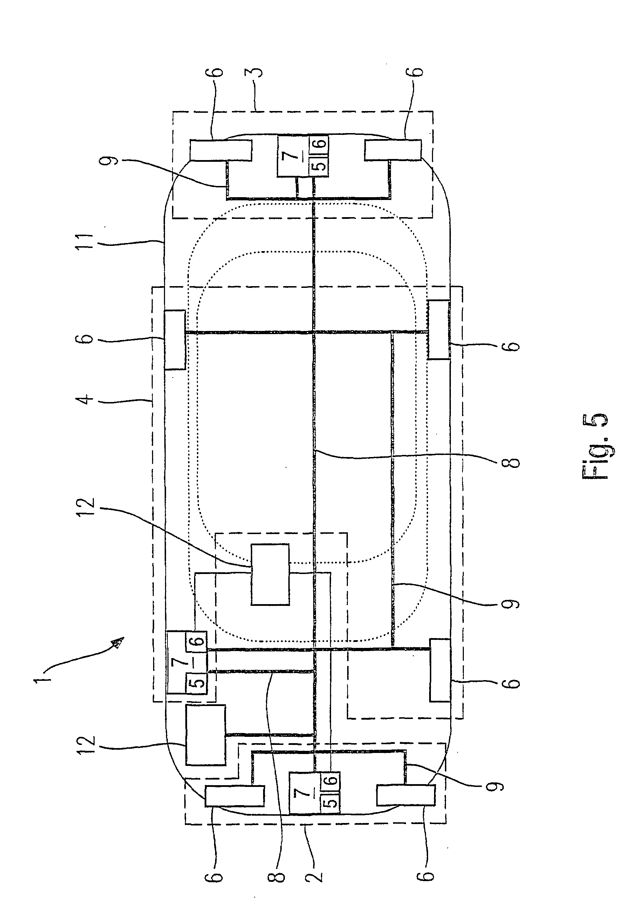

Fig. 5 zeigt ein schematisches Blockschaltbild eines Steuerungs-/Auswertungssystems 1 gemäß einem fünften Ausführungsbeispiel der vorliegenden Erfindung, wonach die Sensoren 6 innerhalb eines Bereiches 2, 3, 4 mit der entsprechend zugeordneten Sensor-/Kontrollereinrichtung 7 jeweils über ein Privat-Sensor-Netzwerksystem verbunden sind. Eine Kommunikation zwischen den einzelnen Sensor/Kontrollereinrichtungen 7 wird über ein Datennetzwerksystem 8 geschaffen, welches auf einer höheren Ebene angeordnet ist. Dadurch werden übergreifende Funktionen realisiert.

Somit werden Steuerungen und Auswertungen, welche die Einzelbereiche 2, 3, 4 betreffen, durch die entsprechende zugeordnete Sensor-/Kontrollereinrichtung 7 ausgeführt, wobei die Kommunikation mit den Sensoren 6 über das Privat-Sensor-Netzwerksystem 9 abläuft. Hingegen werden übergeordnete Funktionen, die aus den Auswertungen der einzelnen Bereiche 2, 3, 4 als Gesamtheit auszuführen sind, über das höher angeordnete Datennetzwerksystem 8 ausgeführt.

Es wird durch die vorliegende Erfindung ein System geschaffen, bei welchem je nach gewünschter Funktionalität nur die erforderlichen Bereiche in das entsprechende Kraftfahrzeug eingebaut werden müssen. Dadurch ergibt sich eine Kostenskalierbarkeit, d.h. bei einer Teilausstattung wird nur wenig mehr als das tatsächlich Benötigte mit einer übersichtlichen Verkabelung verbaut. Dennoch kann später je nach Bedarf eine Ergänzung bzw. Vollausstattung realisiert werden.

Zudem können auftretende Fehler besser eingegrenzt und lediglich entsprechende Bereiche vom Gesamtbetrieb kurzzeitig entfernt werden. Auch ist eine unabhängige Entwicklung der einzelnen Anwendungen fortschrittlicher möglich als bei lediglich einem Zentralsystem.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere ist eine Wahl für eine Aufteilung der einzelnen Bereiche willkürlich und je nach Anwendung ausführbar. So ist eine Anbringung von Sensoren in Eckbereichen ebenso vorstellbar. Auch die Anzahl der in einem bestimmten Bereich eingesetzten Sensoren ist natürlich beliebig.

## Patentansprüche

1. Steuerungs-/Auswertungssystem (1) für einen Sensorverbund, insbesondere in Kraftfahrzeugen, mit mehreren Bereichen (2,3,4), die jeweils mindestens eine Kontrollereinrichtung (5) und mehrere mit dieser verbundene Sensoreinrichtungen (6) aufweisen, wobei die Kontrollereinrichtungen (5) für eine gemeinsame Anwendungsfunktion miteinander verbindbar sind.

2. System nach Anspruch 1, **dadurch gekennzeichnet, dass** die Kontrollereinrichtungen (5) der einzelnen Bereiche (2,3,4) über ein Bus-System (8) miteinander verbindbar sind.

3. System nach einem der Ansprüche 1 oder 2, **dadurch gekennzeichnet, dass** die Sensoreinrichtungen (6) eines Bereiches (2,3,4) mit der entsprechenden Kontrollereinrichtung (5) über ein Bus-System (9) oder eine Punkt-zu-Punkt-Verbindung (10) verbindbar sind.

4. System nach einem der vorhergehenden Ansprüche, **dadurch gekennzeichnet, dass** die Kontrollereinrichtungen (5) jeweils baugleich ausgebildet sind.

5. System nach einem der vorhergehenden Ansprüche, **dadurch gekennzeichnet, dass** in eine Kontrollereinrichtung (5) mindestens eine Sensoreinrichtung (6) integrierbar ist und mit dieser zusammen eine Sensor/Kontrollereinrichtung (7) bildet.

6. System nach Anspruch 5, **dadurch gekennzeichnet, dass** die Sensor-/Kontrollereinrichtungen (7) der einzelnen Bereiche (2,3,4) für eine gemeinsame Anwendungsfunktion über ein Bus-System (8) miteinander verbindbar sind.

7. System nach einem der Ansprüche 5 oder 6, **dadurch gekennzeichnet, dass** die Sensoreinrichtungen (6) eines Bereiches (2,3,4) mit der entsprechenden Sensor/Kontrollereinrichtung (7) über ein Bus-System (9) oder eine Punkt-zu-Punkt-Verbindung (10) verbindbar sind.

8. System nach einem der Ansprüche 5 oder 6, **dadurch gekennzeichnet, dass** im jeweiligen Bereich (2,3,4) die Sensor-/Kontrollereinrichtung (7) gegenüber den mehreren Sensoreinrichtungen (6) nur minimal modifiziert ist.

9. System nach einem der vorhergehenden Ansprüche, **dadurch gekennzeichnet, dass** die Sensoreinrichtungen (6) baugleich ausgebildet sind.

10. System nach einem der vorhergehenden Ansprüche, **dadurch gekennzeichnet, dass** die Sensoreinrichtungen (6) als Nahbereichssensoren (6) ausgebildet sind.

11. System nach einem der vorhergehenden Ansprüche, **gekennzeichnet durch** eine Aufteilung in mindestens einen der folgenden Bereiche: Vorder- (2), Rück- (3), Seiten- (4) und/oder Eckbereich.

12. System nach Anspruch 11, **dadurch gekennzeichnet, dass** der Seitenbereich (4) in einen linken und einen rechten Seitenbereich unterteilbar ist.

13. System nach einem der vorhergehenden Ansprüche, **dadurch gekennzeichnet, dass** ein Bereich bis zu sechs Sensoreinrichtungen (6) aufweist.

14. System nach einem der vorhergehenden Ansprüche, **dadurch gekennzeichnet, dass** die Kontrollereinrichtungen (5) der einzelnen Bereiche (2, 3, 4) mit einer einheitlichen Software ausgestattet sind, in der insbesondere für eine Zuordnung der entsprechenden Kontrollereinrichtung eine Parametrisierung enthalten sein kann.

## Claims

1. Control/evaluation system (1) for a collection of sensors, in particular in motor vehicles, having a plurality of regions (2, 3, 4) which each have at least one controller device (5) and a plurality of sensor devices (6) which are connected thereto, wherein the controller devices (5) can be connected to one another for a common application function.

2. System according to Claim 1, **characterized in that** the controller devices (5) of the individual regions (2, 3, 4) can be connected to one another via a bus system (8).

3. System according to one of Claims 1 or 2, **characterized in that** the sensor devices (6) of a region (2, 3, 4) can be connected to the corresponding controller device (5) via a bus system (9) or a point-to-point connection (10).

4. System according to one of the preceding claims, **characterized in that** the controller devices (5) are each of identical design.

5. System according to one of the preceding claims, **characterized in that** at least one sensor device (6) can be integrated into a controller device (5) and forms with it a sensor/controller device (7).

6. System according to Claim 5, **characterized in that** the sensor/controller devices (7) of the individual regions (2, 3, 4) for a common application function can be connected to one another via a bus system (8).

7. System according to one of Claims 5 or 6, **characterized in that** the sensor devices (6) of a region (2, 3, 4) can be connected to the corresponding sensor/controller device (7) via a bus system (9) or a point-to-point connection (10).

8. System according to one of Claims 5 or 6, **characterized in that** in the respective region (2, 3, 4) the sensor/controller device (7) is modified only to a minimum extent in comparison with the plurality of sensor devices (6).

9. System according to one of the preceding claims, **characterized in that** the sensor devices (6) are of identical design.

10. System according to one of the preceding claims, **characterized in that** the sensor devices (6) are embodied as close-range sensors (6).

11. System according to one of the preceding claims, **characterized by** a division into at least one of following regions: front region (2), rear region (3), side region (4) and/or corner region.

12. System according to Claim 11, **characterized in that** the side region (4) can be divided into a lefthand and a right-hand side region.

13. System according to one of the preceding claims, **characterized in that** a region has up to six sensor devices (6).

14. System according to one of the preceding claims, **characterized in that** the controller devices (5) of the individual regions (2, 3, 4) are equipped with a uniform software which may contain parameterization, in particular for assigning the corresponding controller device.

## Revendications

1. Système de commande/d'exploitation (1) pour un détecteur composé, en particulier sur des véhicules automobiles, comportant plusieurs zones (2, 3, 4) qui présentent respectivement au moins une installation de contrôle (5) et plusieurs installations de capteurs (6) reliées à celle-ci, les installations de contrôle (5) étant reliables les unes aux autres pour une fonction commune d'application.

2. Système selon la revendication 1,
**caractérisé en ce que**
les installations de contrôle (5) des diverses zones (2, 3, 4) sont reliables les uns aux autres par un système de bus (8).

3. Système selon l'une des revendications 1 ou 2,
**caractérisé en ce que**
les installations de capteurs (6) d'une zone (2, 3, 4) sont reliables à l'installation de contrôle (5) correspondante par un système de bus (9) ou une liaison point à point (10).

4. Système selon l'une quelconque des revendications précédentes,
**caractérisé en ce que**
les installations de contrôle (5) ont la même construction.

5. Système selon l'une des revendications 1 ou 2,
**caractérisé en ce qu'**
au moins un installation de capteur (6) est intégrée dans une installation de contrôle (5) et forme avec celle-ci une installation de capteur/contrôle (7).

6. Système selon la revendication 5,
**caractérisé en ce que**
les installations de capteurs/contrôle (7) des diverses zones (2, 3, 4) sont reliables les unes aux autres pour une fonction commune d'application par un système de bus (8).

7. Système selon l'une des revendications 5 ou 6,
**caractérisé en ce que**
les installations de capteurs (6) d'une zone (2, 3, 4) sont reliables à l'installation de capteur/contrôle (7) correspondante par un système de bus (9) ou une liaison point à point (10).

8. Système selon l'une des revendications 5 ou 6,
**caractérisé en ce que**
l'installation de capteur/contrôle (7) dans la zone (2, 3, 4) respective n'est modifiée que de façon minime par rapport à la pluralité des installations de capteurs (6).

9. Système selon l'une quelconque des revendications précédentes,
**caractérisé en ce que**
les installations de capteurs (6) ont la même construction.

10. Système selon l'une quelconque des revendications précédentes,
**caractérisé en ce que**
les installations de capteurs (6) sont des capteurs de zone proche (6).

11. Système selon l'une quelconque des revendications précédentes,
**caractérisé par**
une subdivision en au moins l'une des zones suivantes : zone frontale (2), arrière (3), latérale (4) et/ou angulaire.

12. Système selon la revendication 11,
**caractérisé en ce que**
la zone latérale (4) est subdivisable en une zone latérale gauche et une droite.

13. Système selon l'une quelconque des revendications précédentes,
**caractérisé en ce qu'**
une zone présente jusqu'à six installations de capteurs (6).

14. Système selon l'une quelconque des revendications précédentes,
**caractérisé en ce que**
les installations de contrôle (5) des diverses zones (2, 3, 4) sont munies d'un logiciel uniformisé dans lequel un paramétrage peut être contenu pour une affectation à l'installation de contrôle correspondante.
